**Europäisches Patentamt**

(19) **European Patent Office**

**Office européen des brevets**

(11) Veröffentlichungsnummer: **0 151 138**
**B1**

(12) # EUROPÄISCHE PATENTSCHRIFT

(45) Veröffentlichungstag der Patentschrift:
**24.06.87**

(51) Int. Cl.⁴: **C 11 D 3/48,** C 11 D 1/14,
A 01 N 43/50

(21) Anmeldenummer: **84902440.1**

(22) Anmeldetag: **04.06.84**

(86) Internationale Anmeldenummer:
**PCT/DE 84/00124**

(87) Internationale Veröffentlichungsnummer:
**WO 85/00041 (03.01.85** Gazette 85/1)

(54) **WASCH- UND REINIGUNGSMITTEL MIT ANTIMYCETISCHER WIRKUNG.**

(30) Priorität: **16.06.83 DE 3321840**

(43) Veröffentlichungstag der Anmeldung:
**14.08.85 Patentblatt 85/33**

(45) Bekanntmachung des Hinweises auf die Patenterteilung:
**24.06.87 Patentblatt 87/26**

(84) Benannte Vertragsstaaten:
**AT BE CH DE FR GB LI LU NL SE**

(56) Entgegenhaltungen:
**EP - A - 0 056 151**
**EP - A - 0 056 152**
**EP - A - 0 077 321**
**US - A - 3 658 813**

**MERCK INDEX (1983), 10 Auflage, Seiten 517 (Nr 3542), 1237 (Nr 8474)**

**Die Akte enthält technische Angaben, die nach dem Eingang der Anmeldung eingereicht wurden und die nicht in dieser Patentschrift enthalten sind.**

(73) Patentinhaber: **INSTITUT FÜR INNOVATIONSSYSTEME UND PRODUKTENENTWICKLUNG C.P. WIELAND UND DR. C. ZILLICH, Prinzregentenplatz 15, D-8000 München 80 (DE)**

(72) Erfinder: **WIELAND, Carl, Paul, Hochwaldstrasse 41, D-8011 Baldham (DE)**

(74) Vertreter: **Huber, Bernhard, Dipl.-Chem. et al, Patentanwälte H. Weickmann, Dr. K. Fincke F.A. Weickmann, B. Huber Dr. H. Liska, Dr. J. Prechtel Möhlstrasse 22 Postfach 860 820, D-8000 München 86 (DE)**

## Beschreibung

Die Erfindung betrifft ein Wasch- und Reinigungsmittel mit antimycetischer Wirkung.

Mykosen gehören in den hochindustrialisierten Ländern zu den modernen Zivilisationskrankheiten. Nach neueren Schätzungen erkrankt jeder dritte Bundesbürger ein- oder mehrmals im Laufe seines Lebens an einer Haut- oder Schleimhautmykose. Pharmaka wie Antibiotika, Cytostatika, Kontrazeptiva und Immunosuppressiva begünstigen die Vermehrung von Pilzen auf der Haut und den Schleimhäuten des Menschen. Auch andere Umwelteinflüsse wie Kosmetika und Zigarettenkonsum tragen zu einer Vermehrung von Pilzen bei. Durch die Haltung von Haustieren, insbesondere Heim- und Spieltieren innerhalb von Grossstädten, wird die Entwicklung von Pilzen in der unmittelbaren Umgebung des Menschen ebenso begünstigt. Nun stehen zwar heutzutage leistungsfähige Medikamente zur Behandlung dieser Art von Pilzkrankheiten zur Verfügung, es kommt aber häufig zu Rezidiven. Das ist darauf zurückzuführen, dass zwar die Pilze und Pilzsporen auf der Haut und den Schleimhäuten vernichtet werden, dass aber die Pilze in der Umwelt des Menschen den äusseren Einflüssen widerstehen und nicht absterben. Insbesondere Pilzsporen sind sehr widerstandsfähig und können deshalb für andere Organismen schädliche Umwelteinflüsse überleben.

So ist es mit den bekannten üblichen Wasch- und Reinigungsmitteln nicht möglich, Pilze und Pilzsporen abzutöten, da Pilze und vor allem ihre Sporen oft schon resistent gegen Tenside sind.

Ein handelsübliches, im grosstechnischen Massstab hergestelltes Produkt ist z.B. Natriumlaurylsulfat. Es setzt die Oberflächenspannung des Wassers herab, kann Fette emulgieren und findet daher in der Textilindustrie und bei der Herstellung von Zahncremes Verwendung [The Merck Index (1983), 10. Ed. S. 1237, Nr. 8474].

Es gibt jedoch auch Arzneimittel, die Wirkstoffe zur Therapie von Pilzinfektionen enthalten. Ein solcher Stoff wird z.B. in US-A-3 658 813 gelehrt. Darin wird die Synthese und die Anwendung von Imazalil als fungistatisches Mittel beschrieben. Eine Lösung von Imazalil verhindert das Anwachsen von Pilzkulturen über mehrere Tage hinweg. Es gibt jedoch keinen Hinweis auf das Abtöten von mit Pilzen infizierten Kleidungsstücken während der nur relativ kurzen Waschdauer.

Ein besonderes Problem ergibt sich daraus, dass einerseits viele Kleidungsstücke aus Materialien bestehen, die eine Wäsche nur bei niedrigen Temperaturen ermöglichen und andererseits Reinigungs- und Spülmitel nur mit niedrigen Temperaturen angewendet werden können.

Es war nun Aufgabe der Erfindung, ein Mittel zu finden, mit dem Pilze und Pilzsporen in der Wäsche und in der Umgebung des Menschen auch bei Temperaturen unter 100°C abgetötet werden können. Gelöst wurde diese Aufgabe durch ein Wasch- und Reinigungsmittel mit antimycetischer Wirkung, das dadurch gekennzeichnet ist, dass es neben den üblichen Inhaltsstoffen Natriumlaurylsulfat und Imazalil enthält.

Übliche Waschmittel können bei Temperaturen unter 100°C Pilze und Pilzsporen nicht völlig abtöten. Es konnte nun überraschenderweise gefunden werden, dass durch Zusatz zweier synergistisch wirkender Wirkstoffe das Abtöten von Pilzen und Pilzsporen bei niedrigeren Temperaturen sogar unter 60°C möglich ist.

Das erfindungsgemässe Wasch- und Reinigungsmittel ist nun dazu geeignet, Pilze und Pilzsporen auch auf Kleidungsstücken zu vernichten, die nicht gekocht werden können, sondern nur bei 30°C oder 60°C gewaschen werden können. Weiterhin ist dieses Mittel dazu geeignet, Pilze und Pilzsporen auf Bedarfsgegenständen bei der Reinigung zu vernichten.

Zur Abtötung der Pilze und Pilzsporen sollte normalerweise das Mittel bis zu 40% Natriumlaurylsulfat und bis zu 0,5% Imazalil enthalten. Unter Imazalil wird das 1-2(2,4-dichlorphenyl)-2-(2-propenoxy)--ethyl-1H-imidazol verstanden.

Bevorzugt wird eine Menge von 10 bis 30% Natriumlaurylsulfat verwendet. Das fungizid Imazalil ist durch die synergistische Kombination mit Natriumlaurylsulfat nur in geringen Mengen von bis zu 0,5% notwendig. Als geeignet zeigte sich eine Menge von 0,02 bis 0,2%, um noch eine 100%ige Abtötung der Pilze und Pilzsporen zu gewährleisten.

Das Verhältnis von Natriumlaurylsulfat zu Imazalil ist nicht kritisch. Es zeigte sich jedoch, dass ein Verhältnis von Natriumlaurylsulfat zu Imazalil von 1000 : 1 noch geeignet ist, 100% der Pilze und Pilzsporen abzutöten. Bei einem Verhältnis von 100 : 1 entfaltet die Lösung darüber hinaus noch eine bakterizide Wirkung bei einem Keimgehalt von 10 bis 50 Keimen pro ml Lauge.

Das erfindungsgemässe Mittel eignet sich zur Verwendung als Waschmittel, als Reinigungsmittel und als Spülmittel. Die besonderen Eigenschaften des erfindungsgemässen Mittels ermöglichen es, dieses Mittel als Waschmittel für Wäsche bei niedrigen Temperaturen einzusetzen. Die Abtötung von Mikroorganismen und Pilzen in Kochwäsche ist kein Problem, da diese Organismen Kochtemperaturen nicht überstehen können. Ein Problem ergibt sich jedoch bei Kleidung aus Wolle, Seite, synthetischen Geweben oder auch gefärbten Geweben. Alle diese Materialien vertragen nur Waschtemperaturen von 30°C oder 60°C. Jedoch sind gerade Strümpfe und Wäsche, die entweder aus Wolle oder aus synthetischem Gewebe bestehen als Pilzüberträger zu fürchten. Mit Hilfe des erfindungsgemässen Mittels ist es jetzt möglich, auch in diesen Kleidungsstücken Pilze und Pilzsporen abzutöten und damit dadurch sonst übertragbare Infektionen abzuwehren.

Auch beim Reinigen von Bedarfsgegenständen, die ständig mit der menschlichen Haut in Berührung kommen, war es bisher nicht möglich, Pilze und Pilzsporen abzutöten. Übliche Reinigungsmittel, die ja nur bei niedrigen Temperaturen angewendet werden können, um beim Anwenden keine Verbrennungen zu verursachen, konnten nicht zu einer befriedigenden Abtötung der Pilze und Pilzsporen führen. Das erfindungsgemässe Mittel erlaubt es nun, die Pilze und Pilzsporen auch in der Umgebung des Menschen abzutöten und somit auch hier die Übertragungsmöglichkeit von Pilzkrankheiten auszuschalten.

Die Übertragung von Pilzen und Pilzsporen über Geschirr und insbesondere über von Haustieren benutzte Gefässe ist eine weitere Möglichkeit der Infektion. Auch hier wirkt das erfindungsgemässe Mittel durch seine besonderen Eigenschaften. Auch Spülmittel können nur bei niederen Temperaturen eingesetzt werden, um nicht zu Verbrennungen beim Abspülen zu führen. Mit Hilfe des erfindungsgemässen Mittels, das auch bei niedrigen Temperaturen wirkt, ist es nun möglich, auch Geschirr so zu spülen, dass es keine infektionstüchtigen Pilze und Pilzsporen mehr trägt.

Erfindungsgemäss wird also ein Wasch- und Reinigungsmittel zur Verfügung gestellt, das seine antimycetische Wirkung schon bei niedrigen Temperaturen entfaltet. Durch seine Anwendungsmöglichkeiten auch zum Reinigen und Spülen ist es somit geeignet, die Umgebung des Menschen pilz- bzw. pilzsporenfrei zu machen.

Die folgenden Beispiele erläutern die Erfindung.

*Beispiel 1*

Einem üblichen Waschmittel wurden 20% Natriumlaurylsulfat und 0,02% Imazalil zugesetzt. Dieses Mittel wurde nach den Prüfungsrichtlinien für die Testung von Desinfektionsmitteln der Deutschen Gesellschaft für Hygiene und Mikrobiologie und der Deutschen veterinärmedizinischen Gesellschaft mit Candida albicans und Trichophyton mentagrophytes als Testkeimen geprüft. Die Einwirkungszeit und die Temperatur wurden den beim Waschvorgang vorliegenden Parametern angepasst. Es ergab sich eine 100%ige Abtötung der Keime.

*Vergleichsbeispiel*

Es wurde einem üblichen Waschmittel 20% Natriumlaurylsulfat zugesetzt und wie bei Beispiel 1 getestet. Es ergab sich ein Restkeimgehalt von 1 bis 10 Pilzsporen pro ml Waschlauge.

*Beispiel 2*

Es wurde einem üblichen Flüssigwaschmittel 20% Natriumlaurylsulfat und 0,02% Imazalil zugesetzt. Die Lösung wurde wie im Beispiel 1 geprüft. Es zeigte sich eine 100%ige fungizide Wirkung.

*Beispiel 3*

Es wurde eine Lösung hergestellt aus einem üblichen Waschmittel mit 20% Natriumlaurylsulfat und 0,2% Imazalil. Dann wurde nach den im Beispiel 1 erwähnten Prüfungsrichtlinien auch mit Staphylococcus aureus als Testkeim, der sich als detergenzienresistent erwiesen hat, geprüft. Es zeigte sich, dass bei einem Keimgehalt von 10 bis 50 Keimem pro ml Waschlauge die Lösung eine bakterizide Wirkung entfaltet.

**Patentansprüche**

1. Wasch- und Reinigungsmittel mit antimycetischer Wirkung, dadurch gekennzeichnet, dass es neben den üblichen Inhaltsstoffen Natriumlaurylsulfat und Imazalil enthält.

2. Mittel nach Anspruch 1, dadurch gekennzeichnet, dass es bis zu 40% Natriumlaurylsulfat enthält.

3. Mittel nach Anspruch 1 oder 2, dadurch gekennzeichnet, dass es 10 bis 30% Natriumlaurylsulfat enthält.

4. Mittel nach einem der vorhergehenden Ansprüche, dadurch gekennzeichnet, dass es bis zu 0,5% Imazalil enthält.

5. Mittel nach einem der vorhergehenden Ansprüche, dadurch gekennzeichnet, dass es 0,02 bis 0,2% Imazalil enthält.

6. Mittel nach einem der vorhergehenden Ansprüche, dadurch gekennzeichnet, dass das Verhältnis von Natriumlaurylsulfat zu Imazalil von 1000 : 1 bis 100 : 1 beträgt.

7. Verwendung des Mittels nach einem der vorhergehenden Ansprüche als Waschmittel.

8. Verwendung des Mittels nach einem der vorhergehenden Ansprüche als Waschmittel für 30°- bis 60°C-Wäsche.

9. Verwendung des Mittels nach einem der vorhergehenden Ansprüche als Reinigungsmittel.

10. Verwendung des Mittels nach einem der vorhergehenden Ansprüche als Spülmittel.

**Claims**

1. Washing and cleaning agent with antimycetic action, characterised in that, besides the usual component materials, it contains sodium lauryl sulphate and imazalil.

2. Agent according to claim 1, characterised in that it contains up to 40% sodium lauryl sulphate.

3. Agent according to claims 1 or 2, characterised in that it contains 10 to 30% sodium lauryl sulphate.

4. Agent according to one of the preceding claims, characterised in that it contains up to 0.5% imazalil.

5. Agent according to one of the preceding claims, characterised in that it contains 0.02 to 0.2% imazalil.

6. Agent according to one of the preceding claims, characterised in that the ratio of sodium lauryl sulphate to imazalil amounts to from 1000 : 1 to 100 : 1.

7. Use of the agent according to one of the preceding claims as washing agent.

8. Use of the agent according to one of the preceding claims as washing agent for 30° to 60°C washes.

9. Use of the agent according to one of the preceding claims as cleaning agent.

10. Use of the agent according to one of the preceding claims as rinsing agent.

**Revendications**

1. Produit de lavage et de nettoyage doué d'un effet antimycétique, caractérisé en ce qu'il contient, en plus des constituants habituels, du laurylsulfate de sodium et de l'imazalil.

2. Produit suivant la revendication 1, caractérisé en ce qu'il contient jusqu'à 40% de laurylsulfate de sodium.

3. Produit suivant la revendication 1 ou 2, caractérisé en ce qu'il contient 10 à 30% de laurylsulfate de sodium.

4. Produit suivant l'une des revendications précédentes, caractérisé en ce qu'il contient jusqu'à 0,5% d'imazalil.

5. Produit suivant l'une des revendications précédentes, caractérisé en ce qu'il contient 0,02 à 0,2% d'imazalil.

6. Produit suivant l'une des revendications précédentes, caractérisé en ce que le rapport du laurylsulfate de sodium à l'imazalil est de 1000 : 1 à 100 : 1.

7. Utilisation du produit suivant l'une des revendications précédentes comme produit de lavage.

8. Utilisation du produit suivant l'une des revendications précédentes comme produit de lavage pour un lavage à 30° jusqu'à 60°C.

9. Utilisation du produit suivant l'une des revendications précédentes comme produit de nettoyage.

10. Utilisation du produit suivant l'une des revendications précédentes comme produit de rinçage.